# EUROPÄISCHE PATENTSCHRIFT

(11) **EP 4 281 229 B1**
(45) Veröffentlichungstag und Bekanntmachung des Hinweises auf die Patenterteilung: **19.11.2025**
(21) Anmeldenummer: 22701585.6
(22) Anmeldetag: 21.01.2022
(51) Int. Cl.: B21B 37/32, H01M 4/04

(54) **KALTWALZVORRICHTUNG UND VERFAHREN ZUM GEREGELTEN KALTWALZEN VON ALUMINIUMFOLIE**
COLD-ROLLING DEVICES AND METHOD FOR THE CONTROLLED COLD ROLLING OF ALUMINIUM FOIL
DISPOSITIF DE LAMINAGE À FROID ET PROCÉDÉ DE LAMINAGE À FROID CONTRÔLÉ DE FEUILLE D'ALUMINIUM

(30) Priorität: 25.01.2021 EP 21153201
(43) Veröffentlichungstag der Anmeldung: 29.11.2023
(73) Patentinhaber: Speira GmbH, 41515 Grevenbroich (DE)
(72) Erfinder: DRAESE, Stephan, 41334 Nettetal (DE); SCHMITZ, Volker, 41569 Rommerskirchen (DE)
(74) Vertreter: Cohausz & Florack
(86) Internationale Anmeldenummer: PCT/EP2022/051349
(87) Internationale Veröffentlichungsnummer: WO 2022/157312

(56) Entgegenhaltungen:
- EP-A1- 2 842 646
- WO-A1-2013/175158
- US-A- 6 014 881
- US-A1- 2017 080 467
- US-B2- 8 166 785

## Beschreibung

Die Erfindung betrifft eine Kaltwalzvorrichtung zum geregelten Kaltwalzen von Aluminiumfolie, insbesondere Batteriefolie. Weiterhin betrifft die Erfindung Verfahren zum geregelten Kaltwalzen von Aluminiumfolie, insbesondere Batteriefolie.

Ein gängiges Verfahren zur Herstellung von dünnen Aluminiumbändern und -folien ist das Kaltwalzen. Beim Kaltwalzen sind neben anderen Kriterien die Planlage (d.h. die Bandzugspannungsverteilung unter Bandzug) bzw. die Ebenheit (d.h. die Wellenhöhe im zuglosen Zustand bzw. bei sehr geringem Hilfszug) der gewalzten Folien ein wesentliches Qualitätskriterium für die störungsfreie Weiterverarbeitung. Zur Einstellung und Regelung einer definierten Planlage bzw. Ebenheit verfügen Kaltwalzwerke üblicherweise über Stellglieder zur Beeinflussung der Walzspalts bzw. der Walzspaltkontur, die abhängig vom gewählten Betriebspunkt (z.B. Arbeits-, Stützwalzenballen) oder abhängig von einer inline gemessenen Bandzugspannungsverteilung, wahlweise in einem geschlossenen Regelkreis, parametrisiert werden, zum Beispiel über eine Walzenbiegung, ein Schwenken von Walzen bzw. eine Einstellung eines Anpresskraftgradienten über die Walzenbreite, eine axiale Walzenverschiebung, eine konturvariable Stützwalze oder über eine Zonenkühlung. Die jeweiligen Stellglieder haben jeweilige Wirkbereiche (linear, quadratisch, biquadratisch, xⁿ) sowie physikalische Grenzen in ihrem Stell- bzw. Korrekturbereich.

Die Zonenkühlung wird vorzugsweise eingesetzt, um Planlagefehler höherer Ordnung zu kontrollieren. Die Zonenkühlung unterscheidet sich insofern von anderen Stellgliedern, als dass die Temperaturdifferenz zwischen Kühlmedium und Arbeitswalzen, die als treibende Kraft der Walzspaltkonturänderung genutzt wird, aus dem Umformprozess selbst heraus gebildet wird. Die Temperierung der Arbeitswalzen erfolgt durch die bei der Umformung freiwerdende Wärmemenge. Die Zonenkühlung kommt dort an ihre Grenzen, wo die aus dem Umformprozess generierte Wärmemenge zu gering ist, um eine wirkungsvolle Temperaturdifferenz der Arbeitswalze(n) zum Kühlmedium einzustellen. Auch eine Reduzierung der Kühlmediumtemperatur zur Erhöhung der Temperaturdifferenz ist nach unten begrenzt, da zum Beispiel Löslichkeiten von Additiven im Kühlmedium oder Kondensatbildung an Anlagenteilen Grenzen setzen.

Eine Walzvorrichtung mit Zonenkühlung (oder alternativ Zonenerwärmung) ist aus der US 8,166,785 B2 bekannt. Weiterhin wird in der US 2017/0080467 A1 ein Verfahren zur thermischen Kontrolle von Arbeitswalzen durch lokales Erwärmen oder Abkühlen bekannt, jedoch nicht für Aluminiumfolie. Zudem beschreibt die WO 2013/175158 A1, die die Basis für den Oberbegriff der Ansprüche 1, 8 und 10 bildet, eine Aluminiumkaltwalzvorrichtung mit interner Kühlung und externer Zonenerwärmung.

Hiervon ausgehend liegt der vorliegenden Erfindung die Aufgabe zu Grunde, auch bei Walzprodukten aus Walzstichen mit wegen geringer Umformarbeit geringem Wärmeeintrag, nämlich beim Kaltwalzen von Aluminiumfolie, hohe Ebenheitsanforderungen zu erfüllen.

Gemäß einem ersten Aspekt der vorliegenden Offenbarung wird diese Aufgabe bei einem Verfahren nach Anspruch 8 zum geregelten Kaltwalzen von Aluminiumfolie, insbesondere Batteriefolie, bei dem unter Verwendung einer mehrere Walzen aufweisenden Kaltwalzvorrichtung ein Kaltwalzvorgang an einer Aluminiumfolie durchgeführt wird, bei dem eine Regelung des Kaltwalzvorgangs erfolgt zur Kontrolle der Ebenheit und/oder der Planlage der Aluminiumfolie, wobei die Regelung zumindest teilweise über eine Zonenkühlung an mindestens einer der mehreren Walzen, insbesondere an einer Arbeitswalze oder an einer Stützwalze, erfolgt, erfindungsgemäß dadurch gelöst, dass die mindestens eine der mehreren Walzen während der Regelung über die Zonenkühlung über die gesamte Walzenbreite geheizt wird, insbesondere mit einem flüssigen Heizmedium beaufschlagt wird oder induktiv geheizt wird.

Der Kaltwalzvorgang an der Aluminiumfolie kann insbesondere durchgeführt werden unter Verwendung einer Kaltwalzvorrichtung zum geregelten Kaltwalzen von Aluminiumfolie, insbesondere Batteriefolie, wobei die Kaltwalzvorrichtung mehrere Walzen aufweist, wobei die Kaltwalzvorrichtung eine Regeleinrichtung aufweist, die dazu eingerichtet ist, eine Regelung eines Kaltwalzvorgangs durchzuführen, insbesondere zur Kontrolle der Ebenheit und/oder der Planlage der Aluminiumfolie, wobei die Kaltwalzvorrichtung eine Kühlmedium-Beaufschlagungseinrichtung aufweist, die dazu eingerichtet ist, mindestens eine der mehreren Walzen, insbesondere eine Arbeitswalze oder eine Stützwalze, mit einem flüssigen Kühlmedium zu beaufschlagen, wobei die Kaltwalzvorrichtung eine Walzen-Heizvorrichtung aufweist, die dazu eingerichtet ist, die mindestens eine der mehreren Walzen zu heizen, wobei die Kühlmedium-Beaufschlagungseinrichtung dazu eingerichtet ist, mehrere Kühlzonen der mindestens einen der mehreren Walzen separat steuerbar mit einem flüssigen Kühlmedium zu beaufschlagen, wobei die Regeleinrichtung dazu eingerichtet ist, die Regelung zumindest teilweise über eine Zonenkühlung durch Ansteuerung der Kühlmedium-Beaufschlagungseinrichtung durchzuführen, und wobei die Walzen-Heizvorrichtung dazu eingerichtet ist, die mindestens eine der mehreren Walzen während der laufenden Zonenkühlung im Wesentlichen über die gesamte Walzenbreite zu heizen. Zu diesem Zweck kann insbesondere die Regeleinrichtung dazu eingerichtet sein, die Walzen-Heizvorrichtung derart anzusteuern, dass die mindestens eine der mehreren Walzen während der laufenden Zonenkühlung im Wesentlichen über die gesamte Walzenbreite geheizt wird.

Insbesondere kann die Walzen-Heizvorrichtung in Form einer Heizmedium-Beaufschlagungseinrichtung ausgebildet ist, die dazu eingerichtet ist, die mindestens eine der mehreren Walzen mit einem flüssigen Heizmedium zu beaufschlagen, wobei die Regeleinrichtung insbesondere dazu eingerichtet sein kann, die Heizmedium-Beaufschlagungseinrichtung derart anzusteuern, dass die mindestens eine der mehreren Walzen während der laufenden Zonenkühlung im Wesentlichen über die gesamte Walzenbreite geheizt wird, indem die mindestens eine der mehreren Walzen während der laufenden Zonenkühlung im Wesentlichen über die gesamte Walzenbreite mit einem flüssigen Heizmedium beaufschlagt wird.

Alternativ kann die Walzen-Heizvorrichtung in Form einer induktiven Walzen-Heizvorrichtung ausgebildet ist, die dazu eingerichtet ist, die mindestens eine der mehreren Walzen induktiv zu heizen, wobei die Regeleinrichtung insbesondere dazu eingerichtet sein kann, die induktive Walzen-Heizvorrichtung derart anzusteuern, dass die mindestens eine der mehreren Walzen während der laufenden Zonenkühlung im Wesentlichen über die gesamte Walzenbreite induktiv geheizt wird.

Bei der zuvor beschriebenen Verwendung der Kaltwalzvorrichtung bzw. bei dem zuvor beschriebene Verfahren gemäß dem ersten Aspekt der vorliegenden Offenbarung wird durch das Heizen der mindestens einen der mehreren Walzen über im Wesentlichen die gesamte Walzenbreite erreicht, dass die Walze global auf ein erhöhtes Temperaturniveau gebracht wird, durch das auch bei geringem Wärmeeintrag durch die geringen Stichabnahmen beim Kaltwalzvorgang selbst eine ausreichende Temperaturdifferenz der Walzenoberfläche zum Kühlmedium erreicht wird, so dass eine effektive Zonenkühlung möglich ist.

Damit erfolgt beim Kaltwalzvorgang insbesondere eine globale Erwärmung der mindestens einen der mehreren Walzen auf ein insgesamt höheres Temperaturniveau kombiniert mit einer lokalen Kühlung der Walze für die Zonenkühlung.

Zu diesem Zweck wird die mindestens eine der mehreren Walze während des Kaltwalzvorgangs vorzugsweise im Wesentlichen gleichmäßig über im Wesentlichen die gesamte Walzenbreite geheizt, insbesondere mit einem flüssigen Heizmedium beaufschlagt oder induktiv geheizt.

Beispielsweise kann vorgesehen sein, die Walze unabhängig von der Regelung des Kaltwalzvorgangs zu heizen, insbesondere mit dem flüssigen Heizmedium zu beaufschlagen oder induktiv zu heizen. Das Heizen der Walze, insbesondere das Beaufschlagung der Walze mit Heizmedium oder das induktive Heizen, wird dann durch die eigentliche Regelung nicht verändert, kann jedoch unter Umständen die Regelung anderer Stellgrößen beeinflussen.

Weiterhin kann vorgesehen sein, die Walze unabhängig von der Regelung des Kaltwalzvorgangs mit einer Grundheizleistung zu heizen, insbesondere mit einem Grunddurchsatz des flüssigen Heizmediums zu beaufschlagen oder mit einer Grundheizleistung induktiv zu heizen. Zusätzlich zu dieser Grundheizleistung, insbesondere diesem Grunddurchsatz, kann dann zum Beispiel eine zusätzliche Heizleistung, insbesondere ein zusätzlicher Durchsatz an Heizmedium, als Stellgröße in die Regelung einbezogen werden.

Der Grunddurchsatz kann insbesondere im Bereich 30 - 300 l/h liegen. Die Temperatur des flüssigen Heizmediums, insbesondere Öls, liegt vorzugsweise im Bereich von 65 - 85 °C. Mit diesen Betriebsparametern kann eine für die Zonenkühlung ausreichende Temperaturdifferenz zwischen Walzenoberfläche und flüssigem Kühlmedium erreicht werden, vorzugsweise im Bereich von 15 - 35 °C.

Gemäß einem zweiten Aspekt der vorliegenden Offenbarung wird die oben genannte Aufgabe bei einer Kaltwalzvorrichtung nach Anspruch 1 zum geregelten Kaltwalzen von Aluminiumfolie, insbesondere Batteriefolie, wobei die Kaltwalzvorrichtung mehrere Walzen aufweist, wobei die Kaltwalzvorrichtung eine Regeleinrichtung aufweist, die dazu eingerichtet ist, eine Regelung eines Kaltwalzvorgangs zur Kontrolle der Ebenheit und/oder der Planlage der Aluminiumfolie durchzuführen, wobei die Kaltwalzvorrichtung eine Walzen-Heizvorrichtung aufweist, die dazu eingerichtet ist, mindestens eine der mehreren Walzen, insbesondere eine Arbeitswalze oder eine Stützwalze, zu heizen, und wobei die Walzen-Heizvorrichtung dazu eingerichtet ist, mehrere Heizzonen der mindestens einen der mehreren Walzen separat steuerbar zu heizen, erfindungsgemäß dadurch gelöst, dass die Regeleinrichtung dazu eingerichtet ist, die Regelung zumindest teilweise über eine inverse Zonenkühlung durch Ansteuerung der Walzen-Heizvorrichtung durchzuführen, wobei die Regeleinrichtung für die inverse Zonenkühlung dazu eingerichtet ist, im Falle einer Sollwertabweichung einer Regelgröße, die einer ersten der mehreren Heizzonen zugeordnet ist, die Walzen-Heizvorrichtung derart anzusteuern, dass eine oder mehrere zweite Heizzonen relativ zur ersten Heizzone stärker geheizt werden. Die Kaltwalzvorrichtung kann insbesondere zum geregelten Kaltwalzen von Aluminiumfolie, insbesondere Batteriefolie, verwendet werden. Weiterhin wird die oben genannte Aufgabe gemäß dem zweiten Aspekt der vorliegenden Offenbarung bei einem Verfahren nach Anspruch 10 zum geregelten Kaltwalzen von Aluminiumfolie, insbesondere Batteriefolie, bei dem unter Verwendung einer mehrere Walzen aufweisenden Kaltwalzvorrichtung, insbesondere unter Verwendung einer Kaltwalzvorrichtung entsprechend dem zweiten Aspekt der vorliegenden Offenbarung, ein Kaltwalzvorgang an einer Aluminiumfolie durchgeführt wird, bei dem eine Regelung des Kaltwalzvorgangs zur Kontrolle der Ebenheit und/oder der Planlage der Aluminiumfolie erfolgt, erfindungsgemäß dadurch gelöst, dass die Regelung zumindest teilweise über eine inverse Zonenkühlung an mindestens einer der mehreren Walzen, insbesondere an einer Arbeitswalze oder an einer Stützwalze, erfolgt, wobei bei der inversen Zonenkühlung im Falle einer Sollwertabweichung einer Regelgröße, die einer ersten von mehreren Heizzonen der mindestens einen der mehreren Walzen zugeordnet ist, eine oder mehrere zweite Heizzonen relativ zur ersten Heizzone stärker geheizt werden.

Bei der zuvor beschriebenen Kaltwalzvorrichtung und deren Verwendung bzw. bei dem zuvor beschriebenen Verfahren gemäß dem zweiten Aspekt der vorliegenden Offenbarung wird durch die inverse Zonenkühlung eine Regelung erreicht, die auch bei einem Stich mit geringer Umformarbeit und damit geringem Wärmeeintrag eine effektive Zonenbeeinflussung ermöglicht.

Während bei der herkömmlichen Zonenkühlung eine Änderung der lokalen Beaufschlagung eines Kühlbereichs einer Walze mit Kühlmedium erfolgt, erfolgt bei der inversen Zonenkühlung stattdessen eine Änderung des Heizens von komplementären Heizbereichen der Walze, insbesondere eine Änderung der Beaufschlagung von komplementären Heizbereichen der Walze mit Heizmedium oder eine Änderung des induktiven Heizens von komplementären Heizbereichen der Walze. Anstatt einen lokalen Bereich der Walze spezifisch zu kühlen, werden bei der inversen Zonenkühlung also andere, insbesondere benachbarte Bereiche der Walze gezielt erhitzt. Auf diese Weise kann eine effektiv entsprechende Beeinflussung der verschiedenen Zonen zueinander erreicht werden. Beim inversen Zonenkühlen findet demnach ein Heizen, aber nicht notwendigerweise auch ein Kühlen statt.

Entsprechend ist die Regeleinrichtung für die inverse Zonenkühlung dazu eingerichtet, im Falle einer Sollwertabweichung einer Regelgröße, die einer ersten der mehreren Heizzonen zugeordnet ist, die Walzen-Heizvorrichtung derart anzusteuern, dass das Heizen einer oder mehrerer zweiter Heizzonen relativ zur ersten Heizzone erhöht wird, insbesondere die Heizmedium-Beaufschlagungseinrichtung derart anzusteuern, dass die Beaufschlagung einer oder mehrerer zweiter Heizzonen mit Heizmedium relativ zur ersten Heizzone erhöht wird. Entsprechend wird bei dem Verfahren vorzugsweise bei der inversen Zonenkühlung im Falle einer Sollwertabweichung einer Regelgröße, die einer ersten von mehreren Heizzonen der mindestens einen der mehreren Walzen zugeordnet ist, das Heizen einer oder mehrerer zweiter Heizzonen relativ zur ersten Heizzone erhöht, insbesondere eine Beaufschlagung einer oder mehrerer zweiter Heizzonen relativ zur ersten Heizzone erhöht. Bei den einen oder den mehreren zweiten Heizzonen handelt es sich um andere Heizzonen als die erste Heizzone, vorzugsweise um zu der ersten Heizzone benachbarte Heizzonen.

Bei der einer Heizzone zugeordneten Regelgröße handelt es sich insbesondere um eine Regelgröße, die sich auf eine der Position der Heizzone entsprechende Position an der Walze oder an der kaltgewalzten Aluminiumfolie bezieht. Werden zum Beispiel die Bandzugspannungen der kaltgewalzten Aluminiumfolie über die Breite (Bandzugspannungsverteilung) als Regelgrößen erfasst, so kann eine Heizzone der an der entsprechenden Position über die Breite gemessenen Bandzugspannung als Regelgröße zugeordnet werden.

Indem bei der inversen Zonenkühlung anstelle eines lokalen Kühlens (wie bei der herkömmlichen Zonenkühlung) ein komplementäres Heizen erfolgt, kann auch bei geringem Wärmeeintrag bei Stichen mit geringer Umformwärme beim Kaltwalzvorgang eine Planlageregelung bzw. -beeinflussung der Aluminiumfolie durchgeführt werden.

Die Kaltwalzvorrichtung, deren Verwendung und das Verfahren gemäß dem ersten und zweiten Aspekt dienen jeweils zum (Planlage-)geregelten Kaltwalzen von Aluminiumfolie, insbesondere von Batteriefolie.

Unter Aluminiumfolie wird insbesondere ein bandförmiges Material aus Aluminium oder einer Aluminiumlegierung mit einer Dicke von maximal 200 µm verstanden. Unter Aluminiumbändern wird demgegenüber insbesondere ein entsprechendes bandförmiges Material, jedoch mit einer Dicke von mehr als 200 µm verstanden.

Insbesondere können die zuvor beschriebenen Kaltwalzvorrichtungen zum Kaltwalzen von Aluminiumfolie mit einer Enddicke von 20 µm oder weniger verwendet werden. Entsprechend kann die Enddicke der Aluminiumfolie bei den beschriebenen Verfahren insbesondere bei 20 µm oder weniger liegen. Bei solchen Enddicken ist die pro Stich bewirkte Erwärmung der Walze(n) zu gering, um durch eine herkömmliche Zonenkühlung eine ausreichende Planlageregelung bewirken zu können. Durch die hier beschriebenen Verfahren und Kaltwalzvorrichtungen kann demgegenüber auch bei solch geringen Enddicken eine zuverlässige Planlageregelung erreicht werden.

Bei dem Kaltwalzvorgang kann es sich insbesondere um einen Texturierstich oder Skin-Pass-Stich handeln. Derartige Kaltwalzvorgänge weisen typischerweise geringe Stichabnahmen bei geringen Foliendicken und damit geringe Umformarbeit auf. Weiterhin kann die insbesondere Aluminiumfolie aus einer thermisch wenig stabilen Legierung bestehen, die daher zum Erreichen bestimmter Festigkeitswerte mit reduzierter Geschwindigkeit und/oder geringer Stichabnahme kaltgewalzt werden muss.

Unter einer thermisch wenig stabilen Legierung wird eine Legierung verstanden, eine niedrige Erholungs- und/oder Rekristallisationstemperatur aufweist. Dies führt bei derartigen Legierungen zur Entfestigung bereits bei niedrigen Temperaturen.

Die Stichabnahme pro Stich beim Kaltwalzvorgang kann insbesondere im Bereich von 1,5 - 55 % liegen. Bei diesen Stichabnahmen reicht die durch die Umformung bewirkte Erwärmung der Walze(n) beim Walzen von Aluminiumfolie typischerweise allein nicht mehr aus, um eine effektive Zonenkühlung durchführen zu können, so dass die Verwendung der Kaltwalzvorrichtung und das Verfahren gemäß dem ersten bzw. gemäß dem zweiten Aspekt der vorliegenden Offenbarung besonders vorteilhaft ist.

Vorzugsweise wird Aluminiumfolie kaltgewalzt, die zur Herstellung von Batterie-Elektroden, insbesondere Batterie-Kathoden, vorgesehen ist, sogenannte Batteriefolie. Die Verwendung der Kaltwalzvorrichtung und das Verfahren gemäß dem ersten und zweiten Aspekt sind insbesondere für Batteriefolie vorteilhaft, da für derartige Folien zum Einen besonders hohe kundenseitige Ebenheitsanforderungen bestehen. Zum anderen besteht Batteriefolie häufig aus nicht thermostabilen Legierungen, die bei relativ niedrigen Temperaturen erholen, so dass zum Erreichen geforderter hoher Endfestigkeiten niedrige Walztemperaturen erforderlich sind, die insbesondere durch geringe Stichabnahmen und/oder geringe Walzgeschwindigkeiten erreicht werden. Gleichzeitig werden an Batteriefolie hohe Ebenheitsanforderungen gestellt, die bei Ebenheitsfehlern höherer Ordnung nicht einzuhalten ist. Daher sind die hier beschriebene Verwendung der Kaltwalzvorrichtung und das Verfahren besonders für Batteriefolie vorteilhaft.

Mit der beschriebenen Kaltwalzvorrichtung und den beschriebenen Verfahren gemäß dem ersten und zweiten Aspekt, insbesondere bei Kombination des ersten und zweiten Aspekts, können insbesondere Batteriefolien mit einer Dicke im Bereich von 5 - 20 µm hergestellt werden, die über die Bandbreite und Bandlänge Ebenheitsabweichungen < 2mm Wellenhöhe bei 8 N/mm² Hilfszug aufweisen.

Die Kaltwalzvorrichtung weist gemäß dem ersten und zweiten Aspekt mehrere Walzen auf. Die mehreren Walzen umfassen insbesondere zwei Arbeitswalzen. Unter Arbeitswalzen werden die Walzen verstanden, die direkt mit dem Walzgut in Kontakt kommen. Zwischen den Arbeitswalzen ist der Walzspalt angeordnet, der eine Walzspaltkontur in Breitenrichtung aufweist. Neben den Arbeitswalzen kann die Kaltwalzvorrichtung noch zwei oder mehrere Stützwalzen aufweisen. Eine Quarto-Kaltwalzvorrichtung umfasst zum Beispiel zwei Arbeits- und zwei Stützwalzen. Es können jedoch auch mehr als zwei Stützwalzen, zum Beispiel Zwischenwalzen, vorgesehen sein.

Bei der mindestens einen der mehreren Walzen kann es sich jeweils um eine Arbeitswalze oder um eine Stützwalze handeln.

Die Regeleinrichtung der Kaltwalzvorrichtung gemäß dem ersten und zweiten Aspekt ist dazu eingerichtet, eine Regelung eines Kaltwalzvorgangs durchzuführen, insbesondere zur Kontrolle der Ebenheit und/oder der Planlage der Aluminiumfolie. Die Regelung umfasst vorzugsweise auch eine Dickenregelung.

Die Regelung erfolgt vorzugsweise in ein oder mehreren, ggf. gekoppelten, Regelkreisen, bei denen ein oder mehrere Regelgrößen erfasst und mit zugehörigen Führungsgrößen verglichen werden sowie abhängig von dem Vergleichsergebnis ein oder mehrere Stellgrößen eingestellt werden.

Gemäß dem ersten Aspekt ist die Regeleinrichtung dazu eingerichtet, die Regelung zumindest teilweise über eine Zonenkühlung durch Ansteuerung der Kühlmedium-Beaufschlagungseinrichtung durchzuführen. Zu diesem Zweck werden insbesondere die Kühlmedium-Beaufschlagungseinrichtung oder einzelne Düsen der Kühlmedium-Beaufschlagungseinrichtung als Stellgrößen des Regelkreises angesteuert. Insbesondere werden bei der Zonenkühlung die Kühlmedium-Beaufschlagungseinrichtung, insbesondere deren einzelne Düsen, so angesteuert, dass die Beaufschlagung der einzelnen Kühlzonen der mindestens einen der mehreren Walzen mit Kühlmedium gezielt verändert wird. Durch die gezielte Veränderung der Beaufschlagung einer Kühlzone mit Kühlmedium, insbesondere durch Veränderung des Kühlmediumdurchsatzes und/oder des Kühlmediumdrucks und/oder der Kühlmediumtemperatur für die betreffende Kühlzone, kann die Temperatur der mindestens einen der mehreren Walzen in der betreffenden Kühlzone geändert werden, so dass es zu einer thermischen Ausdehnungsänderung der Walze in der betreffenden Kühlzone kommt. Auf diese Weise lässt sich die Walzenspaltgeometrie lokal im Bereich der betreffenden Kühlzone beeinflussen, wodurch eine Walzspaltkorrektur höherer Ordnung ermöglicht wird.

Gemäß dem zweiten Aspekt ist die Regeleinrichtung dazu eingerichtet, die Regelung zumindest teilweise über eine inverse Zonenkühlung durch Ansteuerung der Walzen-Heizvorrichtung, insbesondere Heizmedium-Beaufschlagungseinrichtung, durchzuführen. Zu diesem Zweck werden insbesondere die Walzen-Heizvorrichtung, insbesondere die Heizmedium-Beaufschlagungseinrichtung oder einzelne Düsen der Heizmedium-Beaufschlagungseinrichtung, als Stellgrößen des Regelkreises angesteuert. Insbesondere werden bei der inversen Zonenkühlung die Walzen-Heizvorrichtung, insbeondere Heizmedium-Beaufschlagungseinrichtung, insbesondere deren einzelne Düsen, so angesteuert, dass das Heizen der ein oder mehreren zweiten Heizzonen der mindestens einen der mehreren Walzen gezielt verändert wird, insbesondere die Beaufschlagung der ein oder mehreren zweiten Heizzonen der mindestens einen der mehreren Walzen mit Heizmedium gezielt verändert wird. Durch die gezielte Veränderung des Heizens der ein oder mehreren zweiten Heizzonen, insbesondere der Beaufschlagung der ein oder mehreren zweiten Heizzonen mit Heizmedium, insbesondere durch Veränderung des Heizmediumdurchsatzes und/oder des Heizmediumdrucks und/oder der Heizmediumtemperatur für die betreffenden zweiten Heizzonen, kann die Temperatur der Walze in den betreffenden zweiten Heizzonen geändert werden, so dass es zu einer thermischen Ausdehnungsänderung der Walze in den betreffenden zweiten Heizzonen kommt. Demgegenüber weist die Walze in den ein oder mehreren ersten Heizzonen keine oder jedenfalls nur eine geringere thermische Ausdehnungsänderung auf, so dass sich die Walzenspaltgeometrie lokal im Bereich der betreffenden ersten Heizzonen beeinflussen lässt, wodurch eine Walzspaltkorrektur höherer Ordnung ermöglicht wird.

Der erste Aspekt und der zweiten Aspekt der vorliegenden Offenbarung können insbesondere auch miteinander kombiniert werden. Entsprechend kann die Regeleinrichtung insbesondere dazu eingerichtet sein,
a) die Regelung zumindest teilweise über eine Zonenkühlung durch Ansteuerung der Kühlmedium-Beaufschlagungseinrichtung durchzuführen, wobei die Walzen-Heizvorrichtung derart angesteuert wird, dass die mindestens eine der mehreren Walzen während der laufenden Zonenkühlung im Wesentlichen über die gesamte Walzenbreite geheizt, insbesondere mit einem flüssigen Heizmedium beaufschlagt wird, und
b) die Regelung zumindest teilweise über eine inverse Zonenkühlung durch Ansteuerung der Walzen-Heizvorrichtung durchzuführen.

Die Regelungen über eine Zonenkühlung und über eine inverse Zonenkühlung können insbesondere zeitgleich oder nacheinander, insbesondere wechselweise, erfolgen.

Auf diese Weise wird dem Walzprozess zum einen durch die Walzen-Heizvorrichtung soviel Energie hinzugefügt, dass der Effekt der Zonenkühlung auch bei geringer Umformarbeit wieder funktional ist. Ergänzend kann durch das Invertieren des Effektes in eine gezielte Zonenerwärmung bei der inversen Zonenkühlung direkter Einfluss auf die Walzspaltkontur genommen werden.

Die Eintragung der Wärmemenge bei der Zonenkühlung und/oder der inversen Zonenkühlung kann insbesondere in einem geschlossenen Regelkreis in Abhängigkeit der inline gemessenen Bandzugspannungsverteilung, optional in Überlagerung mit anderen Planlagestellgliedern kontrolliert werden. Auf diese Weise lassen sich gute Ergebnisse für die Planlage und die Ebenheit der Aluminiumfolie erreichen.

Im Folgenden werden verschiedene Ausführungsformen der Kaltwalzvorrichtung, deren Verwendung und des Verfahrens gemäß dem ersten Aspekts der vorliegenden Offenbarung und der Verwendung und des Verfahrens gemäß dem zweiten Aspekt der vorliegenden Offenbarung beschrieben, wobei die einzelnen Ausführungsformen jeweils unabhängig voneinander sowohl für die Verwendung der Kaltwalzvorrichtung und das Verfahren gemäß dem ersten Aspekt als auch für die Kaltwalzvorrichtung, deren Verwendung und das Verfahren gemäß dem zweiten Aspekt gelten. Zudem können der erste und der zweite Aspekt der vorliegenden Offenbarung miteinander kombiniert werden. Weiterhin können die einzelnen Ausführungsformen beliebig miteinander kombiniert werden.

Bei einer Ausführungsform ist die Walzen-Heizvorrichtung in Form einer Heizmedium-Beaufschlagungseinrichtung ausgebildet, die dazu eingerichtet ist, die mindestens eine der mehreren Walzen mit einem flüssigen Heizmedium zu beaufschlagen, wobei die Heizmedium-Beaufschlagungseinrichtung vorzugsweise dazu eingerichtet ist, mehrere Heizzonen der mindestens einen der mehreren Walzen separat steuerbar mit einem flüssigen Heizmedium zu beaufschlagen. Die Heizmedium-Beaufschlagungseinrichtung kann insbesondere mehrere in Richtung der Walzenachse nebeneinander angeordnete Düsen aufweisen, die vorzugsweise separat ansteuerbar sind. Vorzugsweise können der Durchsatz, der Druck und/oder die Heizmediumtemperatur der einzelnen Düsen eingestellt werden. Auf diese Weise wird eine ortsabhängige Beaufschlagung der Walze mit Heizmedium ermöglicht. Mit dieser Heizmedium-Beaufschlagungseinrichtung kann gemäß dem ersten Aspekt der vorliegenden Offenbarung auch eine gleichmäßige, ortsunabhägige Beaufschlagung der Walze mit Heizmedium erfolgen.

Bei einer weiteren Ausführungsform ist die Walzen-Heizvorrichtung in Form einer induktiven Walzen-Heizvorrichtung ausgebildet, die dazu eingerichtet ist, die mindestens eine der mehreren Walzen induktiv zu heizen, wobei die induktive Walzen-Heizvorrichtung insbesondere dazu eingerichtet ist, die mehrere Heizzonen der mindestens einen der mehreren Walzen separat steuerbar induktiv zu heizen. Auf diese Weise wird ein ortsabhängiges Heizen der Walze ermöglicht. Mit dieser induktiven Walzen-Heizvorrichtung kann gemäß dem ersten Aspekt der vorliegenden Offenbarung auch ein gleichmäßiges, ortsunabhängiges Heizen der Walze erfolgen.

Bei einer Ausführungsform weist die Kaltwalzvorrichtung eine Kühlmedium-Beaufschlagungseinrichtung auf, die dazu eingerichtet ist, die mindestens eine der mehreren Walzen mit einem flüssigen Kühlmedium zu beaufschlagen, wobei die Kühlmedium-Beaufschlagungseinrichtung vorzugsweise dazu eingerichtet ist, mehrere Kühlzonen der mindestens einen der mehreren Walzen separat steuerbar mit einem flüssigen Kühlmedium zu beaufschlagen. Die Kühlmedium-Beaufschlagungseinrichtung kann insbesondere mehrere in Richtung der Walzenachse nebeneinander angeordnete Düsen aufweisen, die vorzugsweise separat ansteuerbar sind. Vorzugsweise können der Durchsatz, der Druck und/oder die Kühlmediumtemperatur der einzelnen Düsen eingestellt werden. Auf diese Weise wird eine ortsabhängige Beaufschlagung der Walze mit Kühlmedium ermöglicht. Mit dieser Kühlmedium-Beaufschlagungseinrichtung kann bei der Verwendung bzw. dem Verfahren gemäß dem zweiten Aspekt der vorliegenden Offenbarung auch eine Beaufschlagung der Walze mit Kühlmedium zusätzlich zur inversen Zonenkühlung erfolgen, insbesondere zur Versorgung des Kaltwalzvorgangs mit ausreichend Walzöl als Schmiermittel.

Bei einer Ausführungsform umfasst die Kaltwalzvorrichtung eine Kühlmedium-Beaufschlagungseinrichtung und eine Heizmedium-Beaufschlagungseinrichtung, wobei die Kühlmedium-Beaufschlagungseinrichtung einen ersten Düsenbalken und die Heizmedium-Beaufschlagungseinrichtung einen zweiten Düsenbalken umfasst, wobei der erste und der zweite Düsenbalken einen jeweiligen Rahmen mit nebeneinander angeordneten, jeweils steuerbaren Düsen aufweisen. Auf diese Weise sind eine voneinander unabhängige, insbesondere gleichzeitige Beaufschlagung der Walze mit Kühlmedium und Heizmedium und dadurch eine flexiblere Temperierung der Walze möglich.

Bei einer weiteren Ausführungsform liegen die Breiten der Kühlzonen und/oder der Heizzonen der mindestens einen der mehreren Walzen im Bereich 10 - 150 mm.

Bei einer weiteren Ausführungsform wird Walzöl als Heiz- und/oder Kühlmedium verwendet. Auf diese Weise ist das zusätzliche Beaufschlagen mit Walzöl entbehrlich. Vorzugsweise wird die mindestens eine der mehreren Walzen während des Kaltwalzvorgangs im Wesentlichen über die.gesamte Walzenbreite durchgehend mit flüssigem Kühlmedium beaufschlagt. Bei der Verwendung von Walzöl als Kühlmedium kann die Schmierung der Walzen auf diese Weise sichergestellt werden. Bei einer durchgehenden Beaufschlagung der Walze mit Walzöl kann die Zonenkühlung durch eine lokale Variation des Kühlmediumdurchsatzes, beispielsweise um einen vorgegebenen mittleren Kühlmediumdurchsatz, oder der Kühlmediumtemperatur erfolgen.

Die Kaltwalzvorrichtung kann eine Erfassungseinrichtung aufweisen, die dazu eingerichtet ist, die Bandzugspannungsverteilung der kaltgewalzten Aluminiumfolie zu messen, und die Regeleinrichtung kann dazu eingerichtet sein, die Regelung abhängig von den von der Erfassungseinrichtung gemessenen Werten durchzuführen. Zur Messung der Bandzugspannungsverteilung kann eine quer zur Walzrichtung segmentierte Rolle vorgesehen sein, die eine gewisse Umschlingung mit der Aluminiumfolie aufweist. Durch eine Kraftmessung an den einzelnen Segmenten der Rolle können auf diese Weise die jeweiligen Bandzugspannungen abhängig von der jeweiligen Position quer zur Walzrichtung und damit die Bandzugspannungsverteilung bestimmt werden. Die Messwerte einer solchen Erfassungseinrichtung stellen geeignete Regelgrößen für eine Bandzugspannungsverteilungsregelung dar, wodurch sich die Planlage bzw. Ebenheit der Aluminiumfolie verbessern lässt. Die Bandzugspannungsverteilungsregelung kann insbesondere über Zonenkühlung bei gleichzeitiger gleichmäßiger Beaufschlagung der Walze mit Heizmedium und/oder durch inverse Zonenkühlung erfolgen.

Bei einer weiteren Ausführungsform weist das flüssige Kühlmedium eine Kühlmediumtemperatur im Bereich von 20 - 65 °C, vorzugsweise 35 - 45°C, auf. Durch die Mindesttemperatur von 20 °C, vorzugsweise 35 °C, wird zum einen ein stabiler Lösungszustand der im flüssigen Kühlmedium typischerweise enthaltenen Additive erreicht. Durch die Maximaltemperatur von 65 °C, vorzugsweise 45 °C, wird zum anderen ein Betrieb deutlich unterhalb des Flammpunkts gewährleistet, wodurch die Betriebssicherheit erhöht wird. Darüber hinaus kann eine mögliche Oxidation durch das Kühlmedium reduziert werden.

Bei einer weiteren Ausführungsform liegt der Kühlmediumdurchsatz der Kühlmedium-Beaufschlagungseinrichtung im Bereich von 200 - 5000 l/min, insbesondere 300 - 3000 l/min. Insbesondere kann der Kühlmediumdurchsatz der Kühlmedium-Beaufschlagungseinrichtung in einem Bereich von 0.2 l/min. bis 1.0 l/min. pro mm Walzenbreite liegen. Bei einem Kühlmediumdurchsatz unterhalb der genannten Mindestdurchsätze kann eine ausreichende Schmierung für den Walzvorgang sowie eine ausreichende Reinigung der Walzen durch das Kühlmedium unter Umständen nicht gewährleistet werden. Bei einem Kühlmediumdurchsatz oberhalb der genannten Maximaldurchsätze kann es zu einer zu starken Kühlung einzelner Zonen kommen, wodurch sich das Walzergebnis verschlechtern kann.

Bei einer weiteren Ausführungsform weist das flüssige Heizmedium eine Heizmediumtemperatur im Bereich von 60 - 100 °C, vorzugsweise 65 - 90 °C, auf. Durch Einhalten der genannten Heizmediummindesttemperatur kann beim ersten Aspekt der vorliegenden Offenbarung eine ausreichende Temperaturdifferenz zwischen Walze und Kühlmedium und beim zweiten Aspekt der vorliegenden Offenbarung eine ausreichende Temperaturdifferenz zwischen Walze und Heizmedium beim inversen Zonenkühlen sichergestellt werden. Durch die Maximaltemperatur von 100 °C, vorzugsweise 90 °C, wird zudem ein Betrieb unterhalb des Flammpunkts gewährleistet, wodurch die Betriebssicherheit erhöht wird. Darüber hinaus kann eine mögliche Oxidation durch das Kühlmedium reduziert werden.

Bei einer weiteren Ausführungsform liegt der Heizmediumdurchsatz der Heizmedium-Beaufschlagungseinrichtung im Bereich von 0 - 500 l/min. Insbesondere kann der Heizmediumdurchsatz der Heizmedium-Beaufschlagungseinrichtung in einem Bereich von 0 l/min. bis 0.5 l/min. pro mm Walzenbreite liegen. Bei einem Heizmediumdurchsatz oberhalb der genannten Maximaldurchsätze ist der Betrieb nicht mehr wirtschaftlich.

Bei einer weiteren Ausführungsform liegt die Kühlleistung der Kühlmedium-Beaufschlagungseinrichtung und/oder die Heizleistung der Heizmedium-Beaufschlagungseinrichtung im Bereich von 50 - 200 kW pro m Walzenbreite.

Weitere Vorteile und Merkmale der Kaltwalzvorrichtung und des Verfahrens ergeben sich aus der nachfolgenden Beschreibung von Ausführungsbeispielen, wobei auf die beigefügte Zeichnung Bezug genommen wird.

In der Zeichnung zeigen
- Fig. 1a-b: eine Kaltwalzvorrichtung für ein Ausführungsbeispiel der Verwendung und des Verfahrens zum planlagegeregelten Kaltwalzen von Aluminiumfolie gemäß dem ersten und zweiten Aspekt der vorliegenden Offenbarung,
- Fig. 2: eine Illustration der aus dem Stand der Technik bekannten Zonenkühlung,
- Fig. 3: ein Ausführungsbeispiel der Verwendung der Kaltwalzvorrichtung und des Verfahrens gemäß dem ersten Aspekt der vorliegenden Offenbarung,
- Fig. 4: ein Ausführungsbeispiel der Kaltwalzvorrichtung, deren Verwendung und des Verfahrens gemäß dem zweiten Aspekt der vorliegenden Offenbarung und
- Fig. 5: ein Ausführungsbeispiel der Kaltwalzvorrichtung, deren Verwendung und des Verfahrens gemäß dem ersten und zweiten Aspekt der vorliegenden Offenbarung.

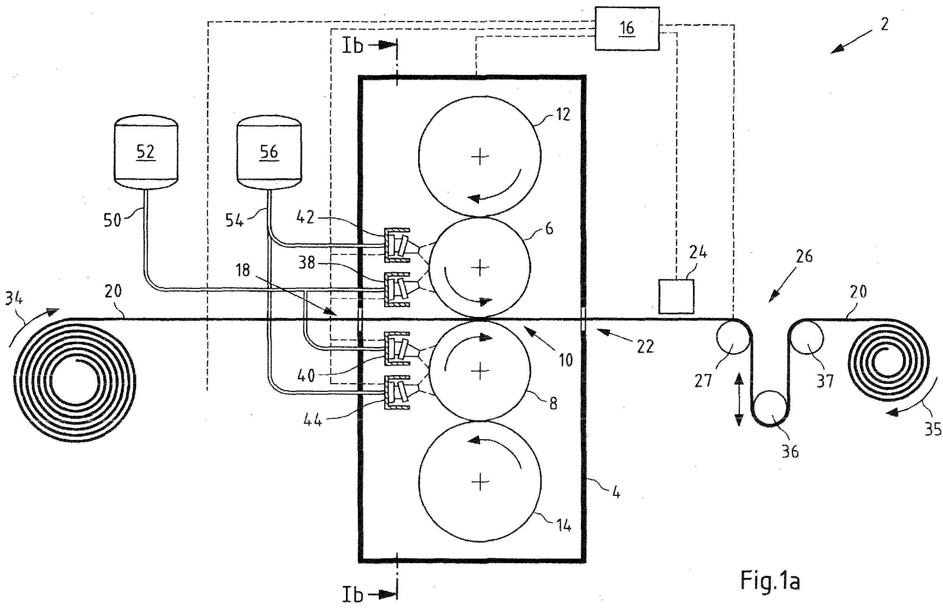

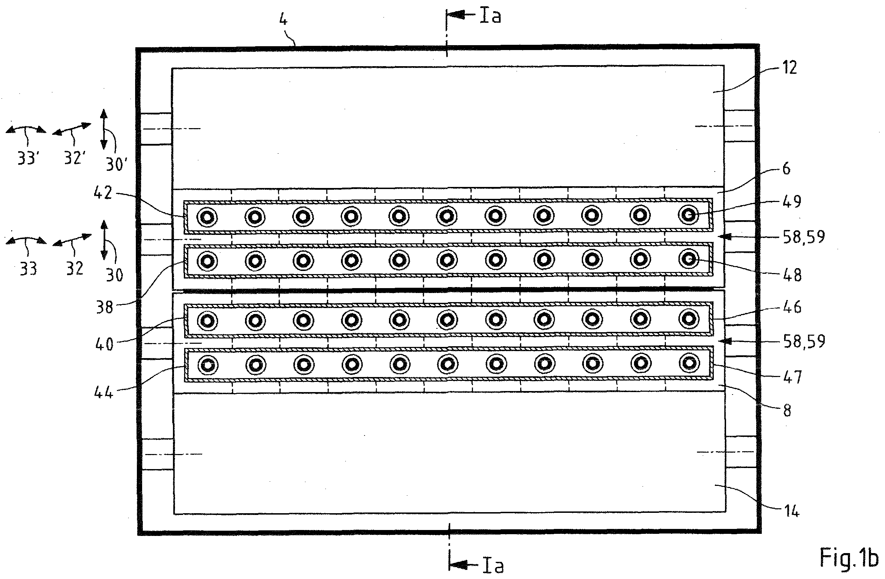

Die Figuren 1a-b zeigen ein Ausführungsbeispiel einer Kaltwalzvorrichtung, die für ein Ausführungsbeispiel der Verwendung der Kaltwalzvorrichtung und des Verfahrens zum geregelten Kaltwalzen von Aluminiumfolie gemäß dem ersten und dem zweiten Aspekt der vorliegenden Offenbarung geeignet ist. Fig. 1a zeigt eine schematische Schnittansicht entsprechend der in Fig. 1b mit Ia bezeichneten Schnittebene. Fig. 1b zeigt eine schematische Ansicht auf die Einlaufseite der Kaltwalzvorrichtung entsprechend der in Fig. 1a mit Ib bezeichneten Sichtebene.

Die Kaltwalzvorrichtung 2 weist ein Kaltwalzgerüst 4 auf, das im vorliegenden Beispiel als Quarto-Kaltwalzgerüst mit einer oberen Arbeitswalze 6, einer unteren Arbeitswalze 8, einer oberen Stützwalze 12 und einer unteren Stützwalze 14 ausgebildet ist. Zwischen der oberen und der unteren Arbeitswalze 6, 8 befindet sich der Walzspalt 10. Beim Walzen von Aluminiumfolie 20 spricht man typischerweise von einem geschlossenen Walzspalt, da sich die Arbeitswalzen 6, 8 aufgrund der geringen Dicke der Aluminiumfolie 20 in den Bereichen außerhalb der Aluminiumfolie 20 berühren.

Die Kaltwalzvorrichtung 2 umfasst weiterhin eine Regeleinrichtung 16, die dazu eingerichtet ist, eine (Planlage-)Regelung eines Kaltwalzvorgangs durchzuführen, bei dem die dem Kaltwalzgerüst von der Einlaufseite 18 zugeführte Aluminiumfolie 20 kaltgewalzt wird, so dass die Aluminiumfolie 20 auf der Auslaufseite 22 eine geringere Dicke aufweist. Die Regeleinrichtung 16 kann beispielsweise eine Mikrocontrollersteuerung oder eine auf einem Computer installierte Steuerungssoftware umfassen.

Die Kaltwalzvorrichtung 2 kann eine Erfassungseinrichtung 24 zur Bestimmung der Dicke der Aluminiumfolie 20 nach dem Walzen aufweisen.

Die Kaltwalzvorrichtung 2 kann weiter eine Erfassungseinrichtung 26 aufweisen, die die Bandzugverteilung der kaltgewalzten Aluminiumfolie 20 misst. Zu diesem Zweck kann die Erfassungseinrichtung 26 beispielsweise mehrere, quer zur Walzrichtung hintereinander angeordnete Rollensegmente 27 aufweisen, über die die Aluminiumfolie 20 geführt wird. Durch eine Kraftmessung an den einzelnen Rollensegmenten kann die Bandzugspannung des zugehörigen Abschnitts der Aluminiumfolie 20 an der entsprechenden Position quer zur Walzrichtung gemessen werden, so dass sich aus den Messungen an verschiedenen Rollen die Bandzugspannungsverteilung ergibt.

Um eine ausreichende Umschlingung der Rollensegmente 27 mit der Aluminiumfolie 20 zu erreichen, sind vorzugsweise weitere Rollen 36, 37 vorgesehen, über die die Aluminiumfolie 20 geführt ist. Die Rolle 36 kann verfahrbar sein (s. Doppelpfeil), um das Einfädeln der Aluminiumfolie 20 um die Rollen 27, 36, 37 zu erleichtern.

Die Regeleinrichtung 16 ist dazu eingerichtet, verschiedene Komponenten der Kaltwalzvorrichtung 2 als Stellgrößen anzusteuern, nämlich zum Beispiel
a) Stelleinrichtungen 30, 30' zur Einstellung der vertikalen Lage der Arbeitswalzen 6, 8 und/oder der Stützwalzen 12, 14,
b) Stelleinrichtungen 32, 32' zum Einstellen eines Kraftgradienten, mit dem die Arbeitswalzen 6, 8 über ihre Breite aufeinander drücken,
c) Stelleinrichtungen 33, 33' zum Biegen der Arbeitswalzen 6, 8 und/oder der . Stützwalzen 12, 14 und/oder
d) Stelleinrichtungen 34, 35 zur Einstellung des Bandzugs auf der Einlauf- oder Auslaufseite, insbesondere Stelleinrichtung zur Einstellung der Ab- und/oder Aufcoilgeschwindigkeit.

Darüber hinaus weist die Kaltwalzvorrichtung 2 eine obere und eine untere Kühlmedium-Beaufschlagungseinrichtung 38, 40 auf, die dazu eingerichtet sind, die obere bzw. die untere Arbeitswalze 6, 8 mit einem flüssigen Kühlmedium zu beaufschlagen. Alternativ oder zusätzlich können die Kühlmedium-Beaufschlagungseinrichtungen 38, 40 auch dazu eingerichtet sein, eine Stützwalze mit einem flüssigen Kühlmedium zu beaufschlagen.

Weiterhin weist die Kaltwalzvorrichtung 2 eine Walzen-Heizvorrichtungen 42, 44 in Form einer oberen und einer untere Heizmedium-Beaufschlagungseinrichtung auf, die dazu eingerichtet sind, die obere bzw. die untere Arbeitswalze 6, 8 mit einem flüssigen Heizmedium zu beaufschlagen. Alternativ oder zusätzlich können die Heizmedium-Beaufschlagungseinrichtungen 38, 40 auch dazu eingerichtet sein, eine Stützwalze mit einem flüssigen Heizmedium zu beaufschlagen.

Die Kühlmedium-Beaufschlagungseinrichtungen 38, 40 und die Heizmedium-Beaufschlagungseinrichtungen 42, 44 umfassen jeweils einen Rahmen 46, 47 mit nebeneinander angeordneten Düsen 48, 49. Die Düsen 48 der Kühlmedium-Beaufschlagungseinrichtungen 38, 40 sind über Versorgungsleitungen 50 an eine Kühlmedium-Versorgung 52 angeschlossen und die Düsen 49 der Heizmedium-Beaufschlagungseinrichtungen 42, 44 sind über Versorgungsleitungen 54 an eine Heizmedium-Versorgung 56 angeschlossen. Die Kühlmedium-Versorgung 52 kann insbesondere dazu eingerichtet sein, Walzöl mit einer einstellbaren Temperatur im Bereich von 20 - 65 °C, insbesondere 35 - 45 °C, als Kühlmedium zu den Düsen der Kühlmedium-Beaufschlagungseinrichtungen 38, 40 zu leiten. Die Heizmedium-Versorgung 52 kann insbesondere dazu eingerichtet sein, Walzöl mit einer einstellbaren Temperatur im Bereich von 60 - 100 °C, insbesondere 65 - 90 °C, als Heizmedium zu den Düsen der Heizmedium-Beaufschlagungseinrichtungen 42, 44 zu leiten.

Alternativ ist es auch denkbar, die Düsen 48 der Kühlmedium-Beaufschlagungseinrichtungen und die Düsen 49 der Heizmedium-Beaufschlagungseinrichtungen an eine gemeinsame Versorgung anzuschließen und an den einzelnen Düsen 49 der Heizmedium-Beaufschlagungseinrichtungen 42, 44 Heizmittel zum Erhitzen des Walzöls auf den gewünschten Temperaturbereich vorzusehen.

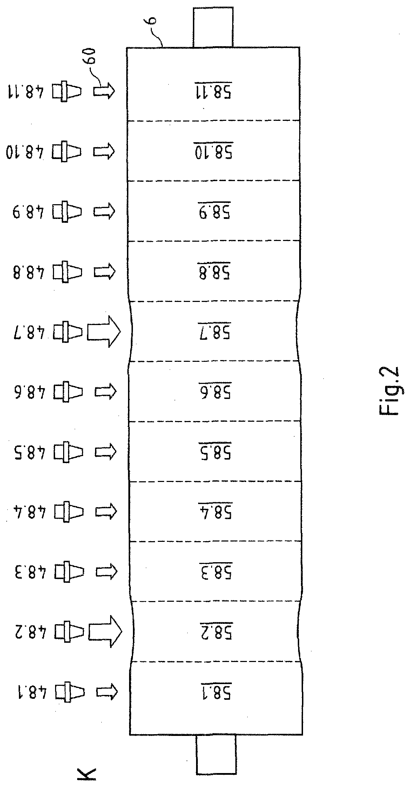

Die Düsen 48 der Kühlmedium-Beaufschlagungseinrichtungen 38, 40 und die Düsen 49 der Heizmedium-Beaufschlagungseinrichtung sind über die Regeleinrichtung 16 einzeln ansteuerbar, so dass die aus einer jeweiligen Düse 48 bzw. 49 austretende Menge an Walzöl selektiv gesteuert werden kann. Jede Düse 48 der Kühlmedium-Beaufschlagungseinrichtungen 38, 40 ist einer jeweilige Kühlzone 58 der zugehörigen Arbeitswalze 6, 8 zugeordnet, die von dieser Düse 48 mit Kühlmedium beaufschlagt werden kann. Entsprechend ist jeder Düse 49 der Heizmedium-Beaufschlagungseinrichtungen 42, 44 eine jeweilige Heizzone 59 der zugehörigen Arbeitswalze 6, 8 zugeordnet, die von dieser Düse 49 mit Heizmedium beaufschlagt werden kann. Die einzelnen Kühl- bzw. Heizzonen 58, 59 sind in Fig. 1b (ebenso wie in den Fig. 2 - 4) durch gestrichelte Linien voneinander abgegrenzt. Die Kühlzonen 58 und die Heizzonen 59 einer Arbeitswalze können - wie in Fig. 1b dargestellt - gleich (jede Kühlzone entspricht einer jeweiligen Heizzone) oder unterschiedlich sein, wobei sich die Kühl- und Heizzonen insbesondere in ihrer jeweiligen Anzahl und/oder der jeweiligen Breite unterscheiden können.

In einem alternativen Ausführungsbeispiel können die Walzen-Heizvorrichtungen 42, 44 auch als induktive Walzen-Heizvorrichtungen ausgebildet sein. Eine solche Walz-Heizvorrichtung umfasst für jede Heizzone 59 einer Walze insbesondere mindestens eine jeweilige zugeordnete Induktionsspule, die einzeln steuerbar mit einem Heizstrom beaufschlagbar ist, um die Walze im Bereich der entsprechenden Heizzone 59 induktiv zu erhitzen.

Die Regeleinrichtung 16 ist nun dazu eingerichtet, für die (Planlage-)Regelung eines Kaltwalzvorgangs, insbesondere die Düsen 48 der Kühlmedium-Beaufschlagungseinrichtungen 38, 40 und/oder die Düsen 49 der Heizmedium-Beaufschlagungseinrichtungen 42, 44 als Stellgrößen anzusteuern. Auf diese Weise können die Walzengeometrien der Arbeitswalzen 6 und 8 lokal beeinflusst werden, so dass bei der Regelung Abweichungen der Regelgrößen insbesondere von Vorgabegrößen von höherer Ordnung korrigiert werden können.

Mögliche Regelungen des Kaltwalzvorgangs unter Verwendung der Kühlmedium-Beaufschlagungseinrichtungen 38, 40 und/oder der Heizmedium-Beaufschlagungseinrichtungen 42, 44 werden nun im Folgenden anhand der Figuren 2 - 4 erläutert.

Die Fig. 2 - 4 zeigen schematisch die obere Arbeitswalze 6 der Kaltwalzvorrichtung mit Düsen 48 der Kühlmedium-Beaufschlagungseinrichtung 38 und Düsen 48 der Heizmedium-Beaufschlagungseinrichtung 42. Aus Gründen der Übersicht sind die Düsen 48 der Kühlmedium-Beaufschlagungseinrichtung 38 in den Fig. 2 - 4 zu Illustrationszwecken oberhalb und die Düsen 48 der Heizmedium-Beaufschlagungseinrichtung 38 unterhalb der Arbeitswalze 6 eingezeichnet und zur Unterscheidung der einzelnen Düsen mit den Bezugsziffern 48.1 bis 48.11 bzw. 49.1 bis 49.11 versehen. Die zugehörigen Kühl- und Heizzonen der Arbeitswalze 6 sind entsprechend mit den Bezugszeichen 58.1 bis 58.11 bzw. 59.1 bis 59.11 versehen, wobei die Kühlzone 58.1 der Düse 48.1, die Kühlzone 58.2 der Düse 48.2 usw., die Heizzone 59.1 der Düse 49.1, die Heizzone 59.2 der Düse 49.2 usw. zugeordnet sind.

Fig. 2 illustriert zunächst die aus dem Stand der Technik bekannte Zonenkühlung. Bei der üblichen Zonenkühlung wird durch gezielte Ansteuerung einzelner Düsen (in Fig. 2 z.B. der Düsen 48.2 und 48.7) lokal ein größerer Durchsatz Kühlmedium 60 auf zugehörigen Kühlzonen der Arbeitswalze 6 (in Fig. 2 z.B. auf die Kühlzonen 58.2 und 58.7) aufgebracht, wodurch die Arbeitswalze 6 in den betreffenden Kühlzonen lokal stärker gekühlt wird, so dass sich der Durchmesser der Arbeitswalze 6 in diesen Kühlzonen lokal verändert, insbesondere reduziert.

Wird bei der Regelung des Kaltwalzverfahrens zum Beispiel festgestellt, dass eine Eigenschaft eines Abschnitts der kaltgewalzten Aluminiumfolie 20 quer zu Walzrichtung von einer Führungsgröße abweicht, insbesondere eine zu niedrige Bandzugspannung aufweist, so kann durch Ansteuerung der Düse 48 der zu diesem Abschnitt korrespondierenden Kühlzone, insbesondere durch Erhöhung des Kühlmediumdurchsatzes dieser Düse, eine lokale Korrektur des Arbeitswalzendurchmessers und damit des Walzspalts erfolgen. Die Veränderung des Durchmessers der Arbeitswalze 6 liegt bei der Zonenkühlung typischerweise im µm-Bereich.

Beim Kaltwalzen von Aluminiumfolie 20 mit geringen Stichabnahmen und/oder langsamen Walzgeschwindigkeiten hat sich jedoch gezeigt, dass sich die Oberfläche der Arbeitswalzen 6, 8 durch die beim Kaltwalzen eingebrachte Wärme nicht ausreichend erwärmt, um eine ausreichende Temperaturdifferenz zur Temperatur des Kühlmediums für eine effektive Zonenkühlung zu erreichen. Weiterhin lässt sich die Temperatur des Kühlmediums typischerweise nicht beliebig reduzieren, da zum Beispiel Löslichkeiten von Additiven im Kühlmedium oder Kondensatbildungen Grenzen setzen. Beim Kaltwalzen von Aluminiumfolie 20 ist die in Fig. 2 illustrierte Zonenkühlung aus dem Stand der Technik daher nur bedingt einsetzbar.

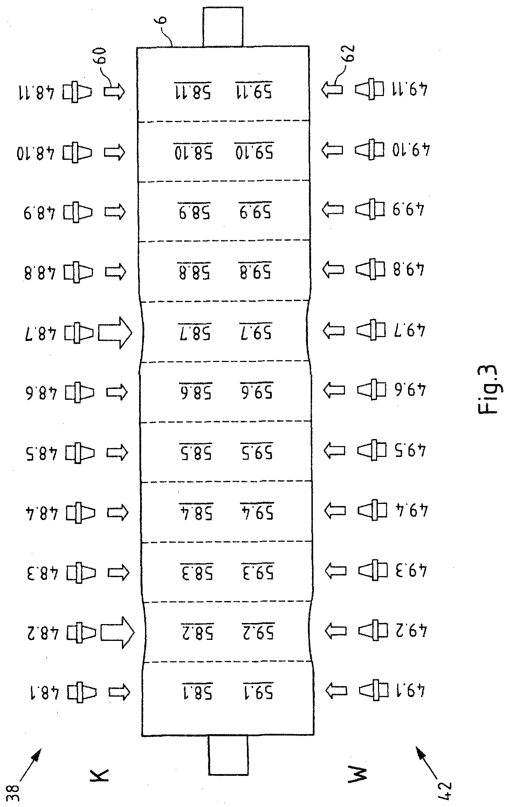

Fig. 3 illustriert nun ein Ausführungsbeispiel der Verwendung der Kaltwalzvorrichtung und des Verfahrens gemäß dem ersten Aspekt der vorliegenden Offenbarung mit der in Fig. 1a-b dargestellten Kaltwalzvorrichtung. Für die in Fig. 3 illustrierte Regelung ist die Regeleinrichtung 16 dazu eingerichtet, die Heizmedium-Beaufschlagungseinrichtung 42 derart anzusteuern, dass die Arbeitswalze 6 während der laufenden Zonenkühlung durch Ansteuerung der Düsen 49.1 - 49.11 der Heizmedium-Beaufschlagungseinrichtung 42 im Wesentlichen über die gesamte Walzenbreite mit flüssigem Heizmedium 62 beaufschlagt wird.

Auf diese Weise wird die Oberflächentemperatur der Arbeitswalze 6 über die gesamte Walzenbreite insgesamt erhöht, so dass für die eigentliche Zonenkühlung auch bei geringen Stichabnahmen eine ausreichende Temperaturdifferenz zum flüssigen Kühlmedium 60 und damit eine effektive Zonenkühlung sichergestellt wird. Mit anderen Worten wird durch die Beaufschlagung der Arbeitswalze 6 mit Heizmedium 62 das Temperaturniveau der gesamten Arbeitswalze 6 erhöht.

Da eine lokale Beaufschlagung der Arbeitswalze 6 mit Heizmedium bei dieser Regelung nicht erforderlich ist, können die Düsen 49.1 - 49.11 der Heizmedium-Beaufschlagungseinrichtung 42 auch gemeinsam ansteuerbar sein, so dass auf eine einzelne Ansteuerbarkeit der Düsen verzichtet werden kann. Weiterhin kann anstelle der Düsen 49.1 - 49.11 auch nur eine einzelne Längsdüse vorgesehen sein, die sich über die Walzenbreite der Arbeitswalze 6 erstreckt und damit eine gleichmäßige Beaufschlagung der Arbeitswalze 6 mit Heizmedium ermöglicht.

In einem alternativen Ausführungsbeispiel kann die Arbeitswalze 6 während der laufenden Zonenkühlung durch Ansteuerung einer vorgesehenen induktiven Walzen-Heizvorrichtung im Wesentlichen über die gesamte Walzenbreite induktiv geheizt werden. Zu diesem Zweck kann die induktive Walzen-Heizvorrichtung zum Beispiel mindestens eine Induktionsspule aufweisen, die sich im Wesentlichen über die gesamte Walzenbreite erstreckt oder erstrecken, wodurch ein gleichmäßiges induktives Erhitzen der Arbeitswalze 6 ermöglicht wird.

In Fig. 3 erfolgt die eigentliche Zonenkühlung durch die Kühlmedium-Beaufschlagungseinrichtung 38 durch lokale Änderungen des Kühlmediumdurchflusses bestimmter Düsen (in Fig. 3 durch unterschiedlich große Pfeile illustriert). Vorzugsweise werden alle Düsen 48.1 - 48.11 der Kühlmedium-Beaufschlagungseinrichtung mit einem vorgegebenen Grunddurchsatz betrieben, der für die Zonenkühlung lokal erhöht wird (in Fig. 3 z.B. bei den Düsen 48.2 und 48.7). Auf diese Weise können die Düsen der Kühlmedium-Beaufschlagungseinrichtung 38 unabhängig von der Zonenkühlung gleichzeitig die Versorgung der Arbeitswalze 6 mit Walzöl über die gesamte Walzenbreite sicherstellen, so dass eine gesonderte Walzölzuführung entbehrlich ist. Alternativ kann die Versorgung mit Walzöl zur Schmierung und Reinigung auch durch die Heizmedium-Beaufschlagungseinrichtung sichergestellt werden, indem die Düsen 49.1 - 49.11 mit einem vorgegebene Grunddurchsatz betrieben werden.

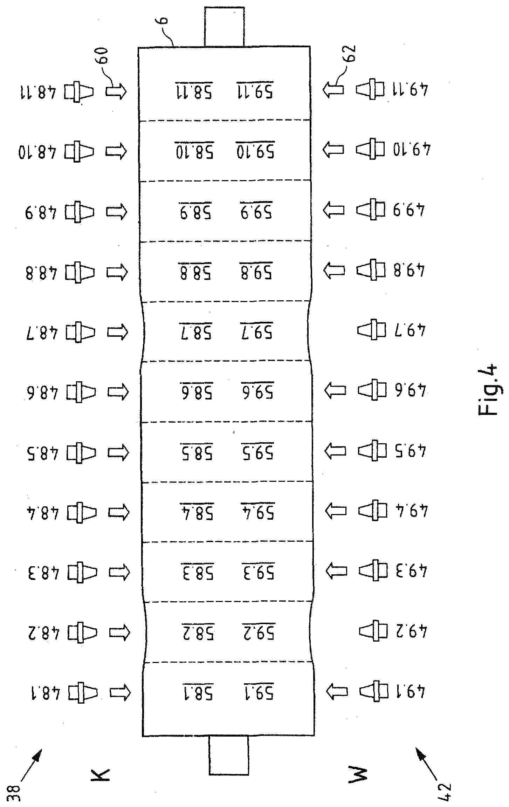

Fig. 4 illustriert nun ein Ausführungsbeispiel der Kaltwalzvorrichtung, deren Verwendung und des Verfahrens gemäß dem zweiten Aspekt der vorliegenden Offenbarung mit der in Fig. 1a-b dargestellten Kaltwalzvorrichtung. Für die in Fig. 4 illustrierte Regelung ist die Regeleinrichtung 16 dazu eingerichtet, die Regelung zumindest teilweise über eine inverse Zonenkühlung durch Ansteuerung der Heizmedium-Beaufschlagungseinrichtung 42 durchzuführen.

Bei der inversen Zonenregelung wird bei einer Sollwertabweichung einer Regelgröße, die einer oder mehreren ersten Heizzonen zugeordnet sind (in Fig. 4 z.B. den Heizzonen 59.2 und 59.7), die Heizmedium-Beaufschlagungseinrichtung 42 derart angesteuert, dass die Beaufschlagung einer oder mehrerer zweiter Heizzonen (in Fig. 4 z.B. die übrigen Heizzonen 59.1, 59.3 - 59.6 und 59.8 - 59.11) mit Heizmedium erhöht wird. Zu diesem Zweck wird der Heizmedium-Durchfluss der diesen zweiten Heizzonen zugeordneten Düsen (in Fig. 4 entsprechend Düsen 49.1, 49.3 - 49.6 und 49.8 - 49.11) erhöht (in Fig. 4 z.B. von Null auf einen bestimmten Wert).

Bei einer einer Heizzone zugeordneten Regelgröße kann es sich zum Beispiel um die Bandzugspannung der Aluminiumfolie an der der Heizzone entsprechenden Position quer zur Walzrichtung auf der kaltgewalzten Aluminiumfolie handeln.

Während bei der (konventionellen) Zonenkühlung also eine Kühlung der von der Sollwertabweichung betroffenen Kühlbereiche erfolgt (s. Fig. 2), werden bei der inversen Zonenkühlung andere als der betroffene Bereich erwärmt. Auf diese Weise wird eine lokale Abkühlung durch eine komplementäre Aufwärmung der Arbeitswalze 6 ersetzt, wodurch sich vergleichbare lokale Geometrieanpassungen der Arbeitswalze 6 und damit der Walzspaltkontur erreichen lassen.

Die Verwendung von Heizmedium anstelle von Kühlmedium stellt sicher, dass auch bei geringen Stichabnahmen eine ausreichende Temperaturdifferenz zur Arbeitswalze besteht.

Bei dem Ausführungsbeispiel in Fig. 4 wird die Arbeitswalze 6 über die Kühlmedium-Beaufschlagungseinrichtung 38 weiterhin gleichmäßig mit einem Grunddurchsatz Kühlmedium beaufschlagt, um ausreichend Walzöl für den Kaltwalzvorgang zur Verfügung zu stellen.

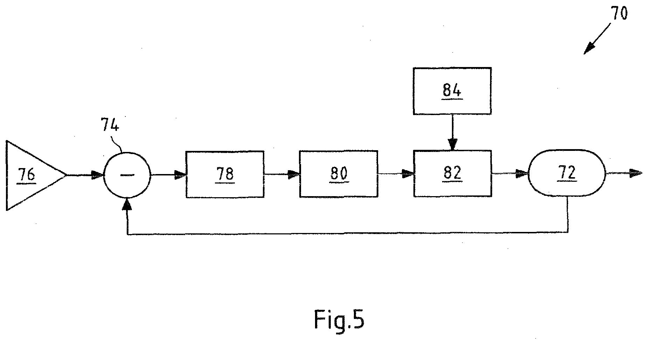

Fig. 5 illustriert schematisch ein Ausführungsbeispiel der Kaltwalzvorrichtung, deren Verwendung und des Verfahrens gemäß dem ersten und zweiten Aspekt der vorliegenden Offenbarung. Fig. 5 zeigt einen Regelkreis 70, mit dem die Vorrichtung 2 aus Fig. 1 mittels der Regelung gesteuert werden kann. Der Regelkreis 70 ist in Fig. 5 zu Illustrationszwecken als einfacher einschleifiger Regelkreis dargestellt. Stattdessen kann der Regelkreis auch als mehrschleifiger, insbesondere kaskadierender Regelkreis ausgebildet sein.

Für den Regelkreis werden Regelgrößen 72 erfasst, die in einer Vergleichseinheit 74 mit jeweiligen Führungsgrößen 76 verglichen werden. Die Vergleichsergebnisse werden im Regler 78 verarbeitet, der damit die Stellgrößen 80 bestimmt. Die Ansteuerung der Stellgrößen beeinflussen die Regelstrecke 82, die selbst unter äußeren Einflüssen 84 steht, und damit wiederum die Regelgrößen 72, wodurch der Regelkreis geschlossen ist.

Als Regelgrößen kommen insbesondere ein oder mehrere der folgenden Regelgrößen in Betracht: Nenndicke der kaltgewalzten Aluminiumfolie 20; Bandzugspannungsverteilung der kaltgewalzten Aluminiumfolie, andere Messgrößen für die Planlage und/oder Ebenheit der kaltgewalzten Aluminiumfolie 20; aus den zuvor genannten Messgrößen berechnete Messgrößen.

Zum Erfassen der Regelgrößen weist die Vorrichtung 2 entsprechende Erfassungseinrichtungen auf, insbesondere die Erfassungseinrichtung 26 für die Bandzugspannungsverteilung und ggf. weiterer Erfassungseinrichtungen.

Als Führungsgrößen 76 kommen entsprechende Vorgaben für die o.g. Regelgrößen in Betracht, insbesondere für die gewünschte Nenndicke der kaltgewalzten Aluminiumfolie 20, für die gewünschte Planlage und/oder Ebenheit, für die gewünschte Bandzugverteilung.

Für die Regelung im Regler 78 kommen insbesondere ein oder mehrere der folgenden Regelungen in Betracht, die insbesondere auch gleichzeitig durchgeführt werden können: Dickenregelung, Ebenheitsregelung bzw. Planlageregelung.

Als Stellgrößen 80 kommen insbesondere ein oder mehrere der folgenden Stellgrößen in Betracht: vertikaler Abstand der Arbeitswalzen 6, 8 zueinander (über die Stelleinrichtungen 30, 30'), Ausrichtung der Arbeits- und/oder Stützwalzen zueinander bzw. Einstellung eines Anpresskraftgradienten über die Walzenbreite (über die Stelleinrichtungen 32, 32'), Biegung der Arbeits- und/oder Stützwalzen (über die Stelleinrichtungen 33, 33'), Bandzugspannung (über die Stelleinrichtungen 34, 35), Walzgeschwindigkeit, Beaufschlagung der einzelnen Kühl- und/oder Heizzonen der Arbeitswalzen 6, 8 mit Kühl- bzw. Heizmedium (über die Kühlmedium-Beaufschlagungseinrichtungen 38, 40 bzw. die Heizmedium-Beaufschlagungseinrichtungen 42, 44).

Die Regelstrecke 82 umfasst vorliegend den Kaltwalzvorgang, der zum einen durch die zuvor genannten Stellgrößen und zum anderen durch äußere Einflüsse (z.B. Umgebungstemperaturschwankungen, Schwankungen in Dicke oder mechanischen Eigenschaften der zugeführten Aluminiumfolie 20 etc.) beeinflusst wird.

Die Führungsgrößen können bei der Vorrichtung 2 insbesondere in einem Speicher der Regeleinrichtung 16 gespeichert sein. Weiterhin können die Vergleichseinheit 74 und der Regler 78 in der Regeleinrichtung 16 implementiert sein. Beispielsweise kann die Regeleinrichtung 16 einen Speicher mit Befehlen aufweisen, deren Ausführung auf mindestens einem Mikroprozessor der Regeleinrichtung 16 die Durchführung der Regelung gemäß Fig. 5 bewirkt.

Der Regler 78 ist vorliegend dazu eingerichtet, die Kühlmedium-Beaufschlagungseinrichtungen 38, 40 und die Heizmedium-Beaufschlagungseinrichtungen 42, 44 derart anzusteuern, dass eine Regelung über eine Zonenkühlung mit gleichzeitiger Beaufschlagung der gesamten Walzenbreite der betreffenden Arbeitswalze mit flüssigem Heizmedium erfolgt (s. Fig. 3) und/oder dass eine Regelung über eine inverse Zonenkühlung erfolgt (s. Fig. 4). Gleichzeitig erfolgt weiterhin vorzugsweise eine Dickenregelung, so dass die kaltgewalzte Aluminiumfolie 20 die gewünschte Nenndicke und/oder das gewünschte Dickenprofil aufweist.

Die Dickenregelung kann unabhängig von der Planlage- bzw. Ebenheitsregelung erfolgen, zum Beispiel anhand der mit der Erfassungseinrichtung 34 gemessenen Aluminiumfoliendicke sowie durch Einstellung der globalen Bandspannung über Ansteuerung der Ab- und/oder Aufcoilgeschwindigkeit mittels der Stellglieder 34 und/oder 35.

## Patentansprüche

1. Kaltwalzvorrichtung (2) zum geregelten Kaltwalzen von Aluminiumfolie (20), insbesondere Batteriefolie,
- wobei die Kaltwalzvorrichtung (2) mehrere Walzen (6, 8) aufweist,
- wobei die Kaltwalzvorrichtung (2) eine Regeleinrichtung (16) aufweist, die dazu eingerichtet ist, eine Regelung eines Kaltwalzvorgangs zur Kontrolle der Ebenheit und/oder der Planlage der Aluminiumfolie (20) durchzuführen,
- wobei die Kaltwalzvorrichtung (2) eine Walzen-Heizvorrichtung (42, 44) aufweist, die dazu eingerichtet ist, mindestens eine der mehreren Walzen (6, 8) zu heizen, und
- wobei die Walzen-Heizvorrichtung (42, 44) dazu eingerichtet ist, mehrere Heizzonen (59.1 - 59.11) der mindestens einen der mehreren Walzen (6, 8) separat steuerbar zu heizen,
**dadurch gekennzeichnet,**
- **dass** die Regeleinrichtung (16) dazu eingerichtet ist, die Regelung zumindest teilweise über eine inverse Zonenkühlung durch Ansteuerung der Walzen-Heizvorrichtung (42, 44) durchzuführen, wobei die Regeleinrichtung (16) für die inverse Zonenkühlung dazu eingerichtet ist, im Falle einer Sollwertabweichung einer Regelgröße, die einer ersten der mehreren Heizzonen (59. 1- 59.11) zugeordnet ist, die Walzen-Heizvorrichtung (42, 44) derart anzusteuern, dass eine oder mehrere zweite Heizzonen (59. 1- 59.11) relativ zur ersten Heizzone (59.1 - 59.11) stärker geheizt werden.

2. Kaltwalzvorrichtung nach Anspruch 1,
**dadurch gekennzeichnet, dass** die Walzen-Heizvorrichtung in Form einer Heizmedium-Beaufschlagungseinrichtung (42, 44) ausgebildet ist, die dazu eingerichtet ist, die mindestens eine der mehreren Walzen (6, 8) mit einem flüssigen Heizmedium (62) zu beaufschlagen, wobei die Heizmedium-Beaufschlagungseinrichtung (42, 44) vorzugsweise dazu eingerichtet ist, mehrere Heizzonen (59.1 - 59.11) der mindestens einen der mehreren Walzen (6, 8) separat steuerbar mit einem flüssigen Heizmedium (62) zu beaufschlagen.

3. Kaltwalzvorrichtung nach Anspruch 1,
**dadurch gekennzeichnet, dass** die Walzen-Heizvorrichtung in Form einer induktiven Walzen-Heizvorrichtung ausgebildet ist, die dazu eingerichtet ist, die mindestens eine der mehreren Walzen (6, 8) induktiv zu heizen, wobei die Walzen-Heizvorrichtung vorzugsweise dazu eingerichtet ist, mehrere Heizzonen (59.1 - 59.11) der mindestens einen der mehreren Walzen (6, 8) separat steuerbar induktiv zu heizen.

4. Kaltwalzvorrichtung nach einem der Ansprüche 1 bis 3,
**dadurch gekennzeichnet, dass** die Regeleinrichtung (16) für die inverse Zonenkühlung dazu eingerichtet ist, im Falle einer Sollwertabweichung einer Regelgröße, die einer ersten der mehreren Heizzonen (59. 1- 59.11) zugeordnet ist, die Walzen-Heizvorrichtung (42, 44) derart anzusteuern, dass die Beaufschlagung einer oder mehrerer zweiter Heizzonen (59.1- 59.11) mit Heizmedium (62) relativ zur ersten Heizzone (59.1- 59.11) erhöht oder die induktive Heizleistung für eine oder mehrere zweite Heizzonen (59.1- 59.11) relativ zur ersten Heizzone (59.1- 59.11) erhöht werden.

5. Kaltwalzvorrichtung nach einem der Ansprüche 1 bis 4,
**dadurch gekennzeichnet, dass** die Kaltwalzvorrichtung (2) eine Kühlmedium-Beaufschlagungseinrichtung (38, 40) aufweist, die dazu eingerichtet ist, die mindestens eine der mehreren Walzen (6, 8) mit einem flüssigen Kühlmedium (60) zu beaufschlagen, wobei die Kühlmedium-Beaufschlagungseinrichtung (38, 40) vorzugsweise dazu eingerichtet ist, mehrere Kühlzonen (58.1 - 58.11) der mindestens einen der mehreren Walzen (6, 8) separat steuerbar mit einem flüssigen Kühlmedium (60) zu beaufschlagen.

6. Kaltwalzvorrichtung nach einem der Ansprüche 2, 4 oder 5,
**dadurch gekennzeichnet, dass** die Kühlmedium-Beaufschlagungseinrichtung (38, 40) einen ersten Düsenbalken und die Heizmedium-Beaufschlagungseinrichtung (42, 44) einen zweiten Düsenbalken umfasst, wobei der erste und der zweite Düsenbalken einen jeweiligen Rahmen (46, 47) mit nebeneinander angeordneten, jeweils steuerbaren Düsen (48.1 - 48.11; 49.1 - 49.11) aufweisen.

7. Kaltwalzvorrichtung nach einem der Ansprüche 1 bis 6,
**dadurch gekennzeichnet, dass** die Kaltwalzvorrichtung (2) eine Erfassungseinrichtung (26) aufweist, die dazu eingerichtet ist, Messwerte für eine Bandzugverteilung der kaltgewalzten Aluminiumfolie (20) zu messen, und dass die Regeleinrichtung (16) dazu eingerichtet ist, die Regelung abhängig von den von der Erfassungseinrichtung (26) gemessenen Werten durchzuführen.

8. Verfahren zum geregelten Kaltwalzen von Aluminiumfolie (20), insbesondere Batteriefolie,
- bei dem unter Verwendung einer mehrere Walzen (6, 8) aufweisenden Kaltwalzvorrichtung (2) ein Kaltwalzvorgang an einer Aluminiumfolie (20) durchgeführt wird,
- bei dem eine Regelung des Kaltwalzvorgangs erfolgt zur Kontrolle der Ebenheit und/oder der Planlage der Aluminiumfolie (20),
**dadurch gekennzeichnet,**
- **dass** die Regelung zumindest teilweise über eine Zonenkühlung an mindestens einer der mehreren Walzen (6, 8) erfolgt und
- **dass** die mindestens eine der mehreren Walzen (6, 8) während der Regelung über die Zonenkühlung über die gesamte Walzenbreite geheizt wird, insbesondere mit einem flüssigen Heizmedium (62) beaufschlagt wird oder induktiv geheizt wird.

9. Verfahren nach Anspruch 8,
**dadurch gekennzeichnet, dass** die mindestens eine der mehreren Walzen (6, 8) während des Kaltwalzvorgangs im Wesentlichen gleichmäßig über im Wesentlichen die gesamte Walzenbreite geheizt wird, insbesondere im Wesentlichen gleichmäßig über im Wesentlichen die gesamte Walzenbreite mit einem flüssigen Heizmedium (62) beaufschlagt wird oder im Wesentlichen gleichmäßig über im Wesentlichen die gesamte Walzenbreite induktiv geheizt wird.

10. Verfahren zum geregelten Kaltwalzen von Aluminiumfolie (20), insbesondere Batteriefolie,
- bei dem unter Verwendung einer mehrere Walzen (6, 8) aufweisenden Kaltwalzvorrichtung (2), insbesondere unter Verwendung einer Kaltwalzvorrichtung gemäß einem der Ansprüche 1 bis 7, ein Kaltwalzvorgang an einer Aluminiumfolie (20) durchgeführt wird,
- bei dem eine Regelung des Kaltwalzvorgangs zur Kontrolle der Ebenheit und/oder der Planlage der Aluminiumfolie (20) erfolgt,
**dadurch gekennzeichnet,**
- **dass** die Regelung zumindest teilweise über eine inverse Zonenkühlung an mindestens einer der mehreren Walzen (6, 8) erfolgt, wobei bei der inversen Zonenkühlung im Falle einer Sollwertabweichung einer Regelgröße, die einer ersten von mehreren Heizzonen (59.1 - 59.11) der mindestens einen der mehreren Walzen (6, 8) zugeordnet ist, eine oder mehrere zweite Heizzonen (59. 1- 59.11) relativ zur ersten Heizzone (59.1 - 59.11) stärker geheizt werden.

11. Verfahren nach Anspruch 10,
**dadurch gekennzeichnet, dass** bei der inversen Zonenkühlung im Falle einer Sollwertabweichung einer Regelgröße, die einer ersten von mehreren Heizzonen (59.1 - 59.11) der mindestens einen der mehreren Walzen (6, 8) zugeordneten ist, eine Beaufschlagung einer oder mehrerer zweiter Heizzonen (59.1 - 59.11) relativ zur ersten Heizzone (59.1 - 59.11) oder die induktive Heizleistung für eine oder mehrere zweite Heizzonen (59.1- 59.11) relativ zur ersten Heizzone (59.1- 59.11) erhöht wird.

12. Verfahren nach einem der Ansprüche 8 bis 11,
**dadurch gekennzeichnet, dass** die mindestens eine der mehreren Walzen (6, 8) während des Kaltwalzvorgangs im Wesentlichen über die gesamte Walzenbreite durchgehend mit einem flüssigen Kühlmedium (60) beaufschlagt wird.

13. Verfahren nach einem der Ansprüche 8 bis 12,
**dadurch gekennzeichnet, dass** die Regelung eine Dickenregelung und/oder eine Regelung einer Bandzugspannungsverteilung der kaltgewalzten Aluminiumfolie (20) umfasst.

14. Verfahren nach einem der Ansprüche 8 bis 13,
**dadurch gekennzeichnet, dass** Walzöl als Heiz- (62) und/oder Kühlmedium (60) verwendet wird.

## Claims

1. Cold rolling apparatus (2) for controlled cold rolling of aluminum foil (20), in particular battery foil,
- wherein the cold rolling apparatus (2) comprises a plurality of rolls (6, 8),
- wherein the cold rolling apparatus (2) comprises a control device (16) which is configured to perform a control of a cold rolling operation for controlling the evenness and/or the flatness of the aluminum foil (20),
- wherein the cold rolling apparatus (2) comprises a roll heating device (42, 44) configured to heat at least one of the plurality of rolls (6, 8), and
- wherein the roll heating device (42, 44) is configured to separately controllably heat a plurality of heating zones (59.1 - 59.11) of the at least one of the plurality of rolls (6, 8),
**characterized**
- **in that** the control device (16) is configured to perform the control at least partly via inverse zone cooling by controlling the roll heating device (42, 44), wherein the control device (16) is configured, for the inverse zone cooling, to control, in the event of a setpoint deviation of a controlled variable assigned to a first of the plurality of heating zones (59.1 - 59.11), the roll heating device (42, 44) in such a way that one or more second heating zones (59.1 - 59.11) are heated more strongly relative to the first heating zone (59.1 - 59.11).

2. Cold rolling apparatus according to claim 1,
**characterized in that** the roll heating device is designed in the form of a heating medium impingement device (42, 44) which is configured to impinge a liquid heating medium (62) on the at least one of the plurality of rolls (6, 8), the heating medium impingement device (42, 44) preferably being configured to separately controllably impinge a liquid heating medium (62) on a plurality of heating zones (59.1 - 59.11) of at least one of the plurality of rolls (6, 8).

3. Cold rolling apparatus according to claim 1,
**characterized in that** the roll heating device is designed in the form of an inductive roll heating device, which is configured to inductively heat the at least one of the plurality of rolls (6, 8), the roll heating device preferably being configured to separately controllably inductively heat a plurality of heating zones (59.1 - 59.11) of the at least one of the plurality of rolls (6, 8).

4. Cold rolling apparatus according to one of claims 1 to 3,
**characterized in that** the control device (16) is configured, for the inverse zone cooling, to control, in the event of a setpoint deviation of a controlled variable assigned to a first of the plurality of heating zones (59.1 - 59.11), the roll heating device (42, 44) in such a way that the impingement of heating medium (62) on one or more second heating zones (59.1 - 59.11) is increased relative to the first heating zone (59.1 - 59.11) or that the inductive heating power for one or more second heating zones (59.1 - 59.11) is increased relative to the first heating zone (59.1 - 59.11).

5. Cold rolling apparatus according to one of claims 1 to 4,
**characterized in that** the cold rolling apparatus (2) has a cooling medium impingement device (38, 40) which is configured to impinge a liquid cooling medium (60) on the at least one of the plurality of rolls (6, 8), the cooling medium impingement device (38, 40) preferably being configured to separately controllably impinge a liquid cooling medium (60) on a plurality of cooling zones (58.1 - 58.11) of the at least one of the plurality of rolls (6, 8).

6. Cold rolling apparatus according to one of claims 2, 4 or 5,
**characterized in that** the cooling medium impingement device (38, 40) comprises a first nozzle bar and the heating medium impingement device (42, 44) comprises a second nozzle bar, the first and second nozzle bars having a respective frame (46, 47) with nozzles (48.1 - 48.11; 49.1 - 49.11) being arranged side by side and each controllable.

7. Cold rolling apparatus according to any one of claims 1 to 6,
**characterized in that** the cold-rolling apparatus (2) has a detection device (26) which is configured to measure measured values for a strip tension distribution of the cold-rolled aluminum foil (20), and **in that** the control device (16) is configured to perform the control as a function of the values measured by the detection device (26).

8. Method for the controlled cold rolling of aluminum foil (20), in particular battery foil,
- in which a cold rolling operation is performed on an aluminum foil (20) using a cold rolling apparatus (2) having a plurality of rolls (6, 8),
- in which a control of the cold rolling operation is performed for controlling the evenness and/or the flatness of the aluminum foil (20),
**characterized**
- **in that** the control is performed at least partly via a zone cooling on at least one of the plurality of rolls (6, 8) and
- **in that**, during the control via the zone cooling, the at least one of the plurality of rolls (6, 8) is heated over the entire roll width, in particular is impinged by a liquid heating medium (62) or is inductively heated.

9. Method according to claim 8,
**characterized in that**, during the cold rolling operation, the at least one of the plurality of rolls (6, 8) is heated substantially uniformly over substantially the entire roll width, in particular is impinged substantially uniformly over substantially the entire roll width by a liquid heating medium (62) or is inductively heated substantially uniformly over substantially the entire roll width.

10. Method for controlled cold rolling of aluminum foil (20), in particular battery foil,
- in which a cold rolling operation is performed on an aluminum foil (20) using a cold rolling apparatus (2) having a plurality of rolls (6, 8), in particular using a cold rolling apparatus according to any one of claims 1 to 7,
- in which a control of the cold rolling operation is performed for controlling the evenness and/or the flatness of the aluminum foil (20),
**characterized**
- **in that** the control is at least partly performed via inverse zone cooling on at least one of the plurality of rolls (6, 8), wherein, in the inverse zone cooling, in the event of a setpoint deviation of a controlled variable assigned to a first of a plurality of heating zones (59.1 - 59.11) of the at least one of the plurality of rolls (6, 8), one or more second heating zones (59.1 - 59.11) are heated more strongly relative to the first heating zone (59.1 - 59.11).

11. Method according to claim 10,
**characterized in that**, in the inverse zone cooling, in the event of a setpoint deviation of a controlled variable assigned to a first of a plurality of heating zones (59.1 - 59.11) of the at least one of the plurality of rolls (6, 8), an impingement on one or more second heating zones (59.1 - 59.11) is increased relative to the first heating zone (59.1 - 59.11) or the inductive heating power for one or more second heating zones (59.1- 59.11) is increased relative to the first heating zone (59.1- 59.11).

12. Method according to any one of claims 8 to 11,
**characterized in that**, during the cold rolling operation, liquid cooling medium (60) is continuously impinged on the at least one of the plurality of rolls (6, 8) over substantially the entire roll width.

13. Method according to any one of claims 8 to 12,
**characterized in that** the control comprises a thickness control and/or a control of a strip tension distribution of the cold rolled aluminum foil (20).

14. Method according to any one of claims 8 to 13,
**characterized in that** rolling oil is used as heating medium (62) and/or cooling medium (60).

## Revendications

1. Dispositif de laminage à froid (2) pour le laminage à froid contrôlé de feuille d'aluminium (20), plus particulièrement d'une feuille de batterie,
- dans lequel le dispositif de laminage à froid (2) présente plusieurs rouleaux (6, 8),
- dans lequel le dispositif de laminage à froid (2) présente un dispositif de régulation (16) qui est conçu pour effectuer une régulation d'un processus de laminage à froid pour le contrôle de la planéité et/ou de la planéarité de la feuille d'aluminium (20),
- dans lequel le dispositif de laminage à froid (2) présente un dispositif de chauffage à rouleaux (42, 44) qui est conçu pour chauffer au moins un des plusieurs rouleaux (6, 8), et
- dans lequel le dispositif de chauffage à rouleaux (42, 44) est conçu pour chauffer d'une manière contrôlable séparément plusieurs zones de chauffage (59.1 - 59.11) du au moins un des plusieurs rouleaux (6, 8),
**caractérisé en ce que**
- le dispositif de régulation (16) est conçu pour effectuer la régulation au moins partiellement par un refroidissement zonal inverse en activant le dispositif de chauffage des rouleaux (42, 44), dans lequel le dispositif de régulation (16) pour le refroidissement zonal inverse est conçu, dans le cas d'un écart de valeur de consigne d'une grandeur réglée qui est affectée à une première des plusieurs zones de chauffage (59.1 - 59.11), pour activer le dispositif de chauffage à rouleaux (42, 44) d'une manière telle qu'une ou plusieurs deuxièmes zones de chauffage (59.1 - 59.11) sont chauffées plus fortement par rapport à la première zone de chauffage (59.1 - 59.11).

2. Dispositif de laminage à froid selon la revendication 1,
**caractérisé en ce que** le dispositif de chauffage à rouleaux est conçu sous forme d'un dispositif d'application de milieu de chauffage (42, 44) qui est conçu pour appliquer un milieu de chauffage liquide (62) à au moins un des plusieurs rouleaux (6, 8), dans lequel le dispositif d'application de milieu de chauffage (42, 44) est conçu de préférence pour appliquer d'une manière contrôlable séparément un milieu de chauffage liquide (62) à plusieurs zones de chauffage (59.1 - 59.11) du au moins un des plusieurs rouleaux (6, 8).

3. Dispositif de laminage à froid selon la revendication 1, **caractérisé en ce que** le dispositif de chauffage à rouleaux est conçu sous forme d'un dispositif de chauffage à rouleaux inductif qui est conçu pour chauffer par induction le au moins un des plusieurs rouleaux (6, 8), dans lequel le dispositif de chauffage à rouleaux est conçu, de préférence, pour chauffer par induction d'une manière contrôlable séparément plusieurs zones de chauffage (59.1 - 59.11) du au moins un des plusieurs rouleaux (6, 8).

4. Dispositif de laminage à froid selon l'une des revendications 1 à 3, **caractérisé en ce que** le dispositif de régulation (16) pour le refroidissement zonal inverse est conçu, dans le cas d'un écart de valeur de consigne d'une grandeur réglée qui est affectée à une première des plusieurs zones de chauffage (59.1 - 59.11), pour activer le dispositif de chauffage à rouleaux (42, 44) d'une manière telle que l'application d'un milieu de chauffage (62) à une ou plusieurs deuxièmes zones de chauffage (59.1 - 59.11) est accrue par rapport à une première zone de chauffage (59.1 - 59.11) ou la puissance de chauffage inductive pour une ou plusieurs deuxièmes zones de chauffage (59.1 - 59.11) est accrue par rapport à la première zone de chauffage (59.1 - 59.11).

5. Dispositif de laminage à froid selon l'une des revendications 1 à 4, **caractérisé en ce que** le dispositif de laminage à froid (2) présente un dispositif d'application de milieu de refroidissement (38, 40) qui est conçu pour appliquer un milieu de refroidissement liquide (60) à au moins un des plusieurs rouleaux (6, 8), dans lequel le dispositif d'application de milieu de refroidissement (38, 40) est conçu, de préférence, pour appliquer un milieu de refroidissement liquide (60) d'une manière contrôlable séparément à plusieurs zones de refroidissement (58.1 - 58.11) du au moins un des plusieurs rouleaux (6, 8).

6. Dispositif de laminage à froid selon l'une des revendications 2, 4 ou 5, **caractérisé en ce que** le dispositif d'application de milieu de refroidissement (38, 40) comprend une première rampe d'injection et le dispositif d'application de milieu de chauffage (42, 44) une deuxième rampe d'injection, dans lequel la première et la deuxième rampe d'injection présentent un cadre respectif (46, 47) avec des buses disposées les unes à côté des autres, respectivement contrôlables (48.1 - 48.11 ; 49.1 - 49.11).

7. Dispositif de laminage à froid selon l'une des revendications 1 à 6, **caractérisé en ce que** le dispositif de laminage à froid (2) présente un dispositif de détection (26) qui est conçu pour mesurer des valeurs de mesure pour une répartition de la tension de bande de la feuille d'aluminium (20) laminée à froid, et **en ce que** le dispositif de régulation (16) est conçu pour effectuer la régulation en fonction des valeurs mesurées par le dispositif de détection (26).

8. Procédé de laminage à froid contrôlé de feuille d'aluminium (20), plus particulièrement de feuille de batterie,
- dans lequel en utilisant un dispositif de laminage à froid (2) présentant plusieurs rouleaux (6, 8) est exécuté un processus de laminage à froid sur une feuille d'aluminium (20),
- dans lequel une régulation du processus de laminage à froid a lieu pour le contrôle de la planéité et/ou de la planéarité de la feuille d'aluminium (20), **caractérisé en ce que**
- la régulation est effectuée au moins partiellement par un refroidissement zonal sur au moins un des plusieurs rouleaux (6, 8) et
- **en ce que** le au moins un des plusieurs rouleaux (6, 8) est chauffé pendant la régulation par le refroidissement zonal sur toute la largeur de rouleau, plus particulièrement subit l'application d'un milieu de chauffage liquide (62) ou est chauffé par induction.

9. Procédé selon la revendication 8, **caractérisé en ce que** le au moins un des plusieurs rouleaux (6, 8) est chauffé pendant le processus de laminage à froid essentiellement d'une manière uniforme sur essentiellement toute la largeur de rouleau, plus particulièrement un milieu de chauffage liquide (62) est appliqué essentiellement d'une manière uniforme sur essentiellement toute la largeur de rouleau ou est chauffé par induction essentiellement d'une manière uniforme sur essentiellement toute la largeur de rouleau.

10. Procédé de laminage à froid contrôlé de feuille d'aluminium (20), plus particulièrement de feuille de batterie,
- dans lequel en utilisant un dispositif de laminage à froid (2) présentant plusieurs rouleaux (6, 8), plus particulièrement en utilisant un dispositif de laminage à froid selon l'une des revendications 1 à 7, est effectué un processus de laminage à froid sur une feuille d'aluminium (20),
- dans lequel une régulation du processus de laminage à froid a lieu pour le contrôle de la planéité et/ou de la planéarité de la feuille d'aluminium (20), **caractérisé en ce que**
- la régulation est effectuée au moins partiellement par un refroidissement zonal inverse sur au moins un des plusieurs rouleaux (6, 8), dans lequel lors du refroidissement zonal inverse dans le cas d'un écart de valeur de consigne d'une grandeur réglée qui est affectée à une première des plusieurs zones de chauffage (59.1 - 59.11) du au moins un des plusieurs rouleaux (6, 8), une ou plusieurs deuxièmes zones de chauffage (59.1 - 59.11) sont chauffées plus fortement par rapport à la première zone de chauffage (59.1 - 59.11).

11. Procédé selon la revendication 10, **caractérisé en ce que** lors du refroidissement zonal inverse dans le cas d'un écart de valeur de consigne d'une grandeur réglée qui est affectée à une première des plusieurs zones de chauffage (59.1 - 59.11) du au moins un des plusieurs rouleaux (6, 8), une application d'une ou de plusieurs deuxièmes zones de chauffage (59.1 - 59.11) est accrue par rapport à la première zone de chauffage (59.1 - 59.11) ou la puissance de chauffage inductive pour une ou plusieurs deuxièmes zones de chauffage (59.1 - 59.11) est accrue par rapport à la première zone de chauffage (59.1 - 59.11).

12. Procédé selon l'une des revendications 8 à 11, **caractérisé en ce qu'**un milieu de refroidissement liquide (60) est appliqué en continu à au moins un des plusieurs rouleaux (6, 8) pendant le processus de laminage à froid essentiellement sur toute la largeur de rouleau.

13. Procédé selon l'une des revendications 8 à 12, **caractérisé en ce que** la régulation comprend une régulation de l'épaisseur et/ou une régulation d'une répartition de la tension de bande de la feuille d'aluminium (20) laminée à froid.

14. Procédé selon l'une des revendications 8 à 13, **caractérisé en ce que** l'huile de laminage est utilisée comme milieu de chauffage (62) et/ou milieu de refroidissement (60).
